# EUROPÄISCHE PATENTSCHRIFT

(11) **EP 3 282 286 B1**
(45) Veröffentlichungstag und Bekanntmachung des Hinweises auf die Patenterteilung: **23.12.2020**
(21) Anmeldenummer: 16183149.0
(22) Anmeldetag: 08.08.2016
(51) Int. Cl.: G01S 17/894, H04N 5/225, G01S 7/497, G06K 7/00, H04N 17/00

(54) **OPTISCHER SENSOR**
OPTICAL SENSOR
CAPTEUR OPTIQUE

(43) Veröffentlichungstag der Anmeldung: 14.02.2018
(73) Patentinhaber: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(56) Entgegenhaltungen:
- EP-A2- 1 813 961
- WO-A1-2011/029651
- DE-A1- 4 439 298

## Beschreibung

Die Erfindung betrifft einen optischen Sensor zur Erfassung von Objekten in einem Erfassungsbereich.

Der optische Sensor weist eine Lichtquelle auf, welche Lichtstrahlen emittiert, sowie einen Empfänger in Form eines eine Anordnung von Empfangselementen aufweisenden Bildsensors, das heißt der Bildsensor bildet eine Kamera aus, deren lichtempfindliche Pixel von den Empfangselementen gebildet sind.

Das Funktionsprinzip des optischen Sensors ist derart, dass die Lichtquelle Lichtstrahlen in den Erfassungsbereich abstrahlt. Von einem zu erfassenden Objekt werden die Lichtstrahlen zum Bildsensor reflektiert, wodurch ein Empfangsbild von dem Objekt im Bildsensor erzeugt wird. In der Auswerteeinheit erfolgt die Auswertung der Empfangsbilder, um so Informationen über das Objekt zu gewinnen. Insbesondere kann in der Auswerteeinheit ein Objektfeststellungssignal generiert werden, welches beispielsweise die Anwesenheit oder die Position eines Objekts innerhalb des Erfassungsbereichs signalisiert.

Um eine hohe Fehlersicherheit des optischen Sensors zu gewährleisten, ist es bekannt, bestimmte Komponenten, insbesondere den Bildsensor, zu testen, um gegebenenfalls vorhandene Fehler aufzudecken und dann geeignete Gegenmaßnahmen einzuleiten.

Die DE 295 20 980 U1 betrifft eine Vorrichtung zum Testen eines lichtempfindlichen Matrix-Sensors, insbesondere einer elektronischen Kamera mit einem CCD-Matrix-Sensor oder CMOS-Matrix-Sensor und mit einer Auswerteeinheit, der Ausgangssignale des Matrix-Sensors zuführbar sind. Zur Durchführung von Tests wird ein vordefiniertes mehrdimensionales Muster im Erfassungsbereich des Matrix-Sensors generiert. Mit einer Vergleichseinrichtung werden die von dem Matrix-Sensor erzeugten Signale mit in einer Speichereinheit gespeicherten Signalen verglichen und in Abhängigkeit von diesem Vergleich ein Signal erzeugt, das einen gestörten oder störungsfreien Betrieb des Sensors anzeigt.

Nachteilig bei derartigen Sensoren ist, dass die zur Testung generierten Muster die von Objekten aufgenommenen Bilder verändern oder verfälschen, so dass während der Testung keine oder keine sichere Objektdetektion möglich ist.

Die DE 44 39 298 A1 betrifft eine 3D-Kamera nach dem Laufzeitprinzip unter Verwendung von Lichtwellen, mit mindestens einem Sender, der eine Lichtwelle auf eine 3D-Szene sendet, sowie einem Empfänger, der die in Richtung des Empfängers reflektierte Lichtwelle über einen zwischendimensionalen Detektor empfängt und demoduliert, einer vom Sender zum Empfänger führenden Referenzlichtstrecke, einem Modulationsgenerator, der sowohl den Sender als auch zum Zweck der Demodulation den Empfänger elektronisch moduliert, einer Ablaufsteuerung und einer Auswerteeinheit, die pixelweise aus den gemessenen Intensitätswerten die Laufzeitbeziehungen und damit die 3D-Koordinaten der 3D-Szene ermittelt und daraus ein dreidimensionales Bild rekonstruiert. Der Sender sendet intensitätsmodulierte Lichtwellen mindestens eines Spektralbereichs, jedoch vorzugsweise von drei, den Farben rot, grün und blau entsprechenden Spektralbereichen aus. Die von der 3D-Szene in den Empfänger reflektierten Lichtwellen werden vorzugsweise durch vorgeschaltete Bandfilter spektral getrennt über mindestens einen Intensitätsmodulator wahlweise von mindestens einem spektral zugehörigen 2D- Empfangselement, vorzugsweise einem Mehrfarben-CCD-Chip, pixelweise in elektrische Signale umgewandelt, aus denen mittels der Auswerteeinheit dreidimensionale Grauwertbilder oder vorzugsweise dreidimensionale Farbbilder rekonstruiert werden. Dabei sendet die Lichtquelle des Senders zumindest zeitweilig Licht konstanter Intensität aussendet, das durch einen nachgeschalteten optischen Intensitätsmodulator moduliert wird, wobei die empfangenen Lichtwellen durch den dem 2D-Empfangselement vorgeschalteten optischen Intensitätsmodulator, der möglichst gleichartig zum sendeseitigen Intensitätsmodulator ausgelegt und betrieben wird, demoduliert werden, und wobei beide Intensitätsmodulatoren durch das gleiche Modulationssignal oder durch das bis auf einen durch ein steuerbares Verzögerungsglied verursachten Zeitversatz gleiche Modulationssignal wahlweise in Form einer Sinusschwingung im MHz bis GHz-Bereich oder in Form von Nadelimpulsen im ps- bis ns-Bereich angesteuert wird.

Die WO 2011/029651 A1 betrifft eine Messvorrichtung zur optischen Entfernungsmessung. Diese umfasst eine Sendeeinrichtung zur Aussendung optischer Messstrahlung auf ein Zielobjekt hin, eine Empfangseinrichtung mit einer Detektionsfläche zur Detektion von von dem Zielobjekt zurücklaufender optischer Messstrahlung und eine Auswerteeinrichtung mit einer Mehrzahl von Entfernungsbestimmungseinrichtungen. Die Detektionsfläche weist eine Vielzahl von Pixeln auf, wobei jedes Pixel mindestens ein lichtempfindliches Element aufweist. Die Auswerteeinrichtung ist derart ausgelegt, dass zumindest einer der Mehrzahl von Entfernungsbestimmungseinrichtungen Detektionssignale einer Mehrzahl von Pixeln zugeleitet werden, auf Basis derer die jeweilige Entfernungsbestimmungseinrichtung Entfernungsdaten ermittelt, die mit der Entfernung zwischen der Messvorrichtung und dem Zielobjekt korrelieren. Die Auswerteeinrichtung ist dazu ausgelegt, eine Entfernung zwischen der Messvorrichtung und dem Zielobjekt basierend auf einer Auswertung von Entfernungsdaten, die durch die Mehrzahl von Entfernungsbestimmungseinrichtungen ermittelt wurden, zu ermitteln.

Der Erfindung liegt die Aufgabe zugrunde, einen optischen Sensor der eingangs genannten Art bereitzustellen, welcher bei geringem konstruktivem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Erfassungsbereich und umfasst eine Lichtstrahlen emittierende Lichtquelle, einen Empfänger in Form eines eine Anordnung von Empfangselementen aufweisenden Bildsensors und eine Auswerteeinheit zur Auswertung von Empfangsbildern des Bildsensors. Der optische Sensor weist eine Testlichtstrahlen emittierende Testlichtquelle auf, wobei die Testlichtstrahlen auf den Bildsensor geführt sind, wodurch eine Variation der Empfangsbilder erhalten wird. Die Auswerteeinheit ist ausgebildet, Nutzinformationen der Empfangsbilder von Testinformationen, welche von den durch die Testlichtstrahlen bewirkten Variationen der Empfangsbilder gebildet sind, zu separieren und getrennt auszuwerten. Die Testlichtquelle ist ausgebildet, räumlich und/oder zeitlich variierende, Testmuster bildende Testlichtstrahlen zu emittieren.

Der optische Sensor weist eine hohe Funktions- und Fehlersicherheit auf, da mit den Testlichtstrahlen, die mit der Testlichtquelle erzeugt werden, Fehler von Komponenten des optischen Sensors erkannt werden können. Wird ein solcher Fehler aufgedeckt, können geeignete Gegenmaßnahmen getroffen werden. Beispielsweise können Stör- oder Warnmeldungen generiert werden, die einem Benutzer den Fehler anzeigen. Generell kann auch der Betrieb des optischen Sensors unterbrochen werden.

Ein wesentlicher Aspekt der Erfindung besteht darin, dass die Testung des optischen Sensors parallel zu der mit dem optischen Sensor durchgeführten Objekterkennung durchgeführt wird, wobei wesentlich ist, dass die Testvorgänge die Objektdetektionen nicht beeinträchtigen.

Zur Durchführung der Testungen, die vorzugsweise zyklisch innerhalb vorgegebener Zeitintervalle erfolgen, werden mit den Testlichtstrahlen der Testlichtquelle vorgegebene, vorzugsweise in der Auswerteeinheit bekannte, Variationen der Empfangsbilder erhalten.

Wesentlich ist, dass in der Auswerteeinheit in den durch die Testlichtstrahlen bewirkten Variationen der Empfangsbilder die durch die Testlichtstrahlen verursachten in den Empfangsbildern enthaltenen Testinformationen von den Nutzinformationen der Empfangsbilder, das heißt Informationen über detektierte Objekte, in der Auswerteeinheit voneinander getrennt werden. Die Trennung kann in der Auswerteeinheit rechnerisch, insbesondere mit dort implementierten Algorithmen erfolgen. Vorteilhaft sind dabei die Strukturen der möglichen Testinformationen als Referenzinformationen in der Auswerteeinheit hinterlegt, so dass in den Empfangsbildern enthaltene Testinformationen in der Auswerteeinheit eindeutig identifiziert werden können.

Sobald in der Auswerteeinheit die Testinformationen identifiziert sind, werden diese von den Nutzinformationen des jeweiligen Empfangsbilds separiert. Dann können die Testinformationen und Nutzinformationen parallel und unabhängig voneinander in der Auswerteeinheit ausgewertet werden. Anhand der Testinformationen wird in der Auswerteeinheit geprüft, ob eine Komponente, insbesondere der Bildsensor, eine Fehlfunktion aufweist. Anhand der Nutzinformationen kann andererseits in der Auswerteeinheit eine Objektdetektion erfolgen, die völlig unbeeinträchtigt von der Testung ist, da die Testinformationen von den Nutzinformationen zuvor separiert werden.

Gemäß einer vorteilhaften Ausführungsform erfolgt in der Auswerteeinheit durch die Auswertung der Testinformationen eine Fehlerkontrolle von Komponenten des optischen Sensors, wobei eine der Komponenten der Empfänger ist.

Durch die Auswertung der Testinformationen kann insbesondere eine komplette Funktionsprüfung des Bildsensors erfolgen. Durch eine geeignete Ausbildung der Testlichtstrahlen können dabei alle Empfangselemente einzeln auf ihre Funktionsfähigkeit geprüft werden. Weiterhin liefern die Testinformationen auch Informationen über die Funktionsfähigkeit weiterer Komponenten des optischen Sensors, beispielsweise der Lichtquelle des optischen Sensors.

Mit dem erfindungsgemäßen optischen Sensor erfolgt allgemein eine Erfassung von Objekten in einem Überwachungsbereich. Im einfachsten Fall generiert der optische Sensor Objektfeststellungssignale, die angeben, ob ein Objekt im Erfassungsbereich vorhanden ist oder nicht.

Weiterhin kann mit dem optischen Sensor auch die Position oder Geschwindigkeit eines Objekts im Erfassungsbereich ermittelt werden.

Vorteilhaft kann hierzu der optische Sensor als Distanzsensor ausgebildet werden. Die Lichtquelle ist dann von einem Sender, insbesondere in Form einer Laserdiode gebildet. Die einzelnen Empfangselemente des Bildsensors bilden Distanzsensorelemente, mittels derer bevorzugt nach einem Laufzeitverfahren die Objektdistanz bestimmt werden kann. Hierzu emittiert der Sender Folgen von Lichtpulsen, deren Laufzeiten zu einem Objekt und zurück zum jeweiligen Empfangselement ermittelt werden. Alternativ kann die Distanzmessung nach dem Phasenmessprinzip erfolgen.

Gemäß einer weiteren Ausgestaltung können mit dem erfindungsgemäßen optischen Sensor Muster erfasst werden.

Die Muster können dabei von eindimensionalen Codes, insbesondere Barcodes, oder zweidimensionalen Codes gebildet sein, so dass der optische Sensor einen Codeleser ausbildet.

Gemäß einer vorteilhaften Ausgestaltung können die Codes ein Positionsmaßsystem auf einem Trägerband bilden, das stationär entlang einer Fahrbahn verlegt ist, entlang derer sich ein Fahrzeug bewegt. In den Codes sind deren Positionen auf dem Trägerband kodiert. Der optische Sensor ist auf dem Fahrzeug positioniert und liest die in seinem Erfassungsbereich liegenden Codes, wodurch eine fortlaufende Positions- und Geschwindigkeitsbestimmung des Fahrzeugs möglich wird.

Schließlich sind die Muster in Form von Reflektoreinheiten gebildet, welche die Eigenschaften der von der Lichtquelle emittierten Lichtstrahlen ändern.

Auch durch die Erfassung derartiger Muster kann mittels des optischen Sensors eine Positions- und Geschwindigkeitsbestimmung durchgeführt werden.

Diese Ausführungsform ist besonders unempfindlich gegen Störeinflüsse wie Fremdlichteinstrahlungen, da die Eigenschaften der von der Lichtquelle emittierten Lichtstrahlen, wie Wellenlänge oder Polarisationszustand, bei Reflexion an den Mustern in charakteristischer Weise geändert werden.

Gemäß einer vorteilhaften Ausgestaltung weist der Empfänger eine zellenförmige oder matrixförmige Anordnung von Empfangselementen auf.

Der Bildsensor kann dabei von einem CCD- oder CMOS-Array gebildet sein.

Erfindungsgemäß ist die Testlichtquelle ausgebildet, räumlich und/oder zeitlich variierende, Testmuster bildende Testlichtstrahlen zu emittieren.

Durch ein räumlich variierendes Testmuster werden vorteilhaft die einzelnen Empfangselemente unterschiedlich belichtet, so dass diese einzeln und unabhängig von anderen Empfangselementen auf ihre Funktionsfähigkeit getestet werden können. Durch zeitlich variierende Testmuster erfolgt eine dynamische Testung der einzelnen Empfangselemente des Bildsensors. Generell sind dabei die Testmuster, die mit der Testlichtquelle generiert werden, in der Auswerteeinheit bekannt, so dass einerseits eine definierte Erwartungshaltung für die Testmuster in der Auswerteeinheit vorgegeben ist, welche mit den tatsächlich am Bildsensor registrierten, durch die Testlichtquelle bedingten Bildinformationen verglichen werden. Weiterhin müssen die Testmuster in der Auswerteeinheit bekannt sein, um die Testinformationen und die Nutzinformationen in den jeweiligen Empfangsbildern separieren zu können.

Gemäß einer ersten Variante werden die Testlichtstrahlen der Testlichtquelle in den Erfassungsbereich abgestrahlt.

In diesem Fall wird ein zu detektierendes Objekt beziehungsweise die Umgebung des Erfassungsbereichs mit den Testlichtstrahlen beaufschlagt, wodurch das vom Objekt oder von der Umgebung aufgenommene Empfangsbild die Testinformationen enthält.

Im einfachsten Fall wird die Testlichtquelle von der Lichtquelle selbst gebildet oder die Lichtquelle mit weiteren Optikkomponenten bildet die Testlichtquelle. Die Lichtquelle kann beispielsweise dadurch als Testlichtquelle betrieben werden, indem diese von der Auswerteeinheit so angesteuert wird, dass sie zeitlich veränderliche Testmuster abstrahlt. Alternativ oder zusätzlich können der Lichtquelle weitere Optikelemente zugeordnet werden, mittels derer räumlich variierende Testmuster erzeugt werden können.

Gemäß einer zweiten Variante weist der optische Sensor ein Hilfsobjekt auf, über welches die Testlichtstrahlen zum Empfänger geführt sind.

Dabei weist das Hilfsobjekt eine Strukturierung auf, wobei bei einer Reflexion der Testlichtstrahlen am Hilfsobjekt diesen durch die Strukturierung ein Testmuster aufgeprägt wird.

Damit werden die Testmuster intern im optischen Sensor erzeugt und sind dementsprechend unabhängig von Umwelteinflüssen.

Besonders vorteilhaft unterscheiden sich die Testmuster von der Umgebung des Erfassungsbereichs und von zu detektierenden Objekten.

Dadurch wird die in der Auswerteeinheit vorgenommene Separierung von Nutzinformationen und Testinformationen besonders erleichtert.

Gemäß einer vorteilhaften Ausgestaltung ist der optische Sensor als Sicherheitssensor ausgebildet und kann somit in Bereichen des Personenschutzes eingesetzt werden. Durch die mit der Testlichtquelle ermöglichte Funktionsprüfung des Bildsensors und gegebenenfalls weiteren Komponenten des optischen Sensors weist dieser bereits eine hohe Fehlersicherheit auf, was eine Voraussetzung für den Einsatz des optischen Sensors in sicherheitstechnischen Anwendungen ist. Um die normativen Anforderungen für den Einsatz des optischen Sensors im Bereich der Sicherheitstechnik zu ermöglichen, kann die Auswerteeinheit einen redundanten, fehlersicheren Aufbau, beispielsweise in Form zweier sich zyklisch gegenseitig überwachender Rechnereinheiten aufweisen.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Zweites Ausführungsbeispiel des erfindungsgemäßen optischen Sensors.
- Figur 3:: Drittes Ausführungsbeispiel des erfindungsgemäßen optischen Sensors.

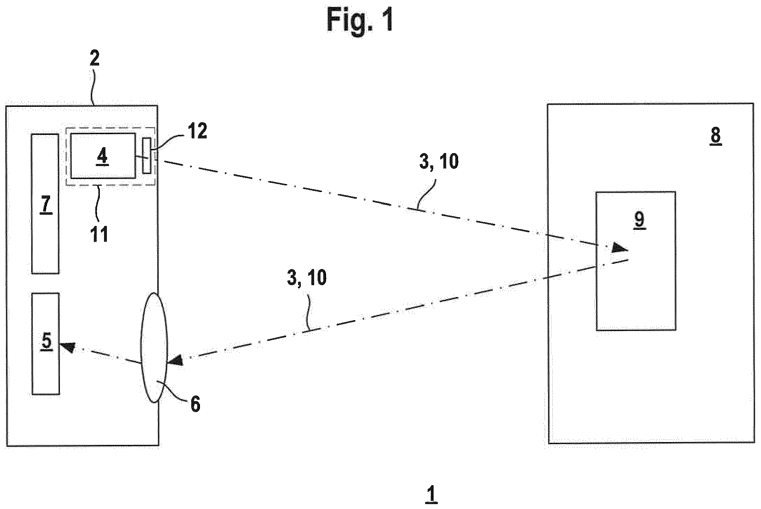

Figur 1 zeigt schematisch ein erstes Ausführungsbeispiel des erfindungsgemäßen optischen Sensors 1. Die Komponenten des optischen Sensors 1 sind in einem Gehäuse 2 integriert.

Der optische Sensor 1 weist eine Lichtstrahlen 3 emittierende Lichtquelle 4 auf, die aus einer Anordnung von Leuchtdioden oder Laserdioden bestehen kann, wobei generell auch eine einzelne Leuchtdiode oder Laserdiode vorgesehen sein kann. Weiterhin weist der optische Sensor 1 einen Empfänger in Form eines Bildsensors 5 mit einer zellenförmigen, eindimensionalen Anordnung oder einer matrixförmigen, zweidimensionalen Anordnung von lichtempfindlichen Empfangselementen auf. Im vorliegenden Fall besteht der Bildsensor 5 aus einem CCD- oder CMOS-Array. Dem Empfänger ist, wie Figur 1 zeigt, eine Empfangsoptik 6 vorgeordnet.

Weiterhin weist der optische Sensor 1 eine Auswerteeinheit 7 auf, die zur Auswertung der im Empfänger empfangenen Bildinformationen und zur Ansteuerung der Lichtquelle 4 dient. Die Auswerteeinheit 7 kann von einem Mikroprozessor oder einer ähnlichen Rechnereinheit gebildet sein.

Mit dem optischen Sensor 1 erfolgt eine Erfassung von Objekten in einem Erfassungsbereich 8, der in Figur 1 schematisch dargestellt ist. Die Größe des Erfassungsbereichs 8 ist im Wesentlichen durch den Sichtbereich des Empfängers bestimmt. Der Erfassungsbereich 8 ist generell von einem Umgebungshintergrund begrenzt. Vor diesem werden Objekte erfasst, indem die von den Lichtquellen 4 emittierten Lichtstrahlen 3 auf das Objekt geführt sind, dort reflektiert und dann über die Empfangsoptik 6 auf den Bildsensor 5 geführt sind, wodurch im Bildsensor 5 ein Erfassungsbild erhalten wird, das in der Auswerteeinheit 7 ausgewertet wird.

Im vorliegenden Fall sind die Objekte von Mustern 9 in Form von Codes gebildet, die in der Auswerteeinheit 7 dekodiert werden.

Zur Funktionsüberprüfung ist eine Testlichtstrahlen 10 emittierende Testlichtquelle 11 vorgesehen. Im vorliegenden Fall ist die Lichtquelle 4 Bestandteil der Testlichtquelle 11. Als weitere Komponente der Testlichtquelle 11 ist der Lichtquelle 4 ein Optikelement 12 wie zum Beispiel ein LCD-Element nachgeordnet. Durch Ansteuerung des Optikelements 12 mit der Auswerteeinheit 7 kann den Lichtstrahlen 3 eine räumliche Kontraststruktur, insbesondere eine Gitter- oder Streifenstruktur aufgeprägt werden. Anstelle von Kontrastmustern kann die Testlichtquelle 11 prinzipiell auch Testmuster mit unterschiedlichen Farben oder Polarisationseigenschaften der Testlichtstrahlen 10 generieren. Durch eine zeitabhängige Ansteuerung der Lichtquelle 4 kann weiterhin eine zeitliche Variation der Lichtstrahlen 3 erhalten werden. Dadurch wird eine Testlichtquelle 11 erhalten, mit der Testlichtstrahlen 10 emittiert und zu dem zu detektierenden Objekt geführt werden, die räumlich und zeitlich variierende Testmuster ausbilden.

Da die Testlichtstrahlen 10 wie die Lichtstrahlen 3 von der Lichtquelle 4 erzeugt werden, werden diese entlang derselben Strahlachse in den Überwachungsbereich geführt.

Der Betrieb der Lichtquelle 4 beziehungsweise der Testlichtquelle 11 wird von der Auswerteeinheit 7 gesteuert. Insbesondere gibt die Auswerteeinheit 7 vor, wann lediglich Lichtstrahlen 3 oder zur Testung von Komponenten des optischen Sensors 1 Testlichtstrahlen 10 emittiert werden.

Die von der Testlichtquelle 11 generierten Testmuster unterscheiden sich zweckmäßig von den Objektstrukturen der zu detektierenden Objekte, im vorliegenden Fall von den Mustern 9 in Form von Codes.

Zur Durchführung der Fehlerkontrolle sind die von der Testlichtquelle 11 erzeugten Testmuster in der Auswerteeinheit 7 bekannt, vorzugsweise als Referenzinformationen abgespeichert.

Werden mit der Testlichtquelle 11 Testlichtstrahlen 10 emittiert, so enthält ein vom Objekt aufgenommenes Empfangsbild im Bildsensor 5 als Nutzinformationen nicht nur die Bildinformation des Objekts. Vielmehr enthält das Empfangsbild in Form der Testmuster auch Testinformationen.

In der Auswerteeinheit 7 werden rechnerisch die Nutzinformationen und die Testinformationen im jeweiligen Empfangsbild separiert und dann parallel und separat voneinander ausgewertet.

Damit können bei aktiver Testlichtquelle 11 parallel anhand der Nutzinformationen die Muster 9 dekodiert werden und anhand der Testinformationen die Empfangselemente des Bildsensors 5 auf eventuelle Fehler untersucht werden. Wird dagegen die Lichtquelle 4 nicht als Testlichtquelle 11 betrieben, sondern derart, dass sie lediglich Lichtstrahlen 3 emittiert, erfolgt nur eine Objektdetektion ohne Testung des Bildsensors 5.

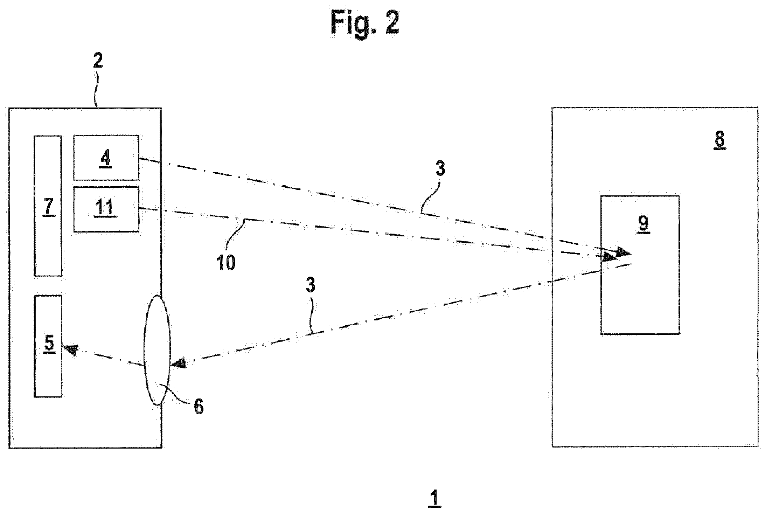

Figur 2 zeigt eine Variante der Ausführungsform gemäß Figur 1. Die Ausführungsform der Figur 2 unterscheidet sich von der Ausführungsform gemäß Figur 1 dadurch, dass zusätzlich zu der Lichtstrahlen 3 emittierenden Lichtquelle 4 eine Testlichtstrahlen 10 emittierende Testlichtquelle 11 vorgesehen ist. Die Lichtstrahlen 3 und Testlichtstrahlen 10 werden parallel in den Erfassungsbereich 8 geführt, so dass sowohl die Lichtstrahlen 3 als auch die Testlichtstrahlen 10 auf zu detektierende Objekte geführt sind. Dabei ist wesentlich, dass mit den Lichtstrahlen 3 und den Testlichtstrahlen 10 dieselbe Fläche auf dem Objekt beleuchtet wird. Hierzu können der Lichtquelle 4 und der Testlichtquelle 11 geeignete, separate Optiken nachgeordnet sein. Alternativ können die Testlichtstrahlen 10 über eine Strahleinblendungsoptik, wie z.B. einem geometrischen oder energetischen Strahlteiler, in den Strahlengang der Lichtstrahlen 3 eingeblendet werden. In diesem Fall kann eine gemeinsame Optik der Lichtquelle 4 und der Testlichtquelle 11 nachgeordnet sein. Mit den Lichtstrahlen 3 der Lichtquelle 4 wird ein Empfangsbild im Bildsensor 5 generiert, anhand dessen in der Auswerteeinheit 7 die Objektdetektion erfolgt. Zur Fehlerkontrolle des Bildsensors 5 wird über die Auswerteeinheit 7 die Testlichtquelle 11 zu vorgegebenen Zeiten anstelle der oder zusätzlich zur Lichtquelle 4 aktiviert. Mit der Testlichtquelle 11 werden wieder räumlich variierende Testmuster generiert, die Testinformationen in den Erfassungsbildern generieren. In der Auswerteeinheit 7 erfolgt wieder eine Separation von Nutzinformationen und Testinformationen, um dann parallel eine Objektdetektion und eine Fehlerkontrolle des Bildsensors 5 vornehmen zu können.

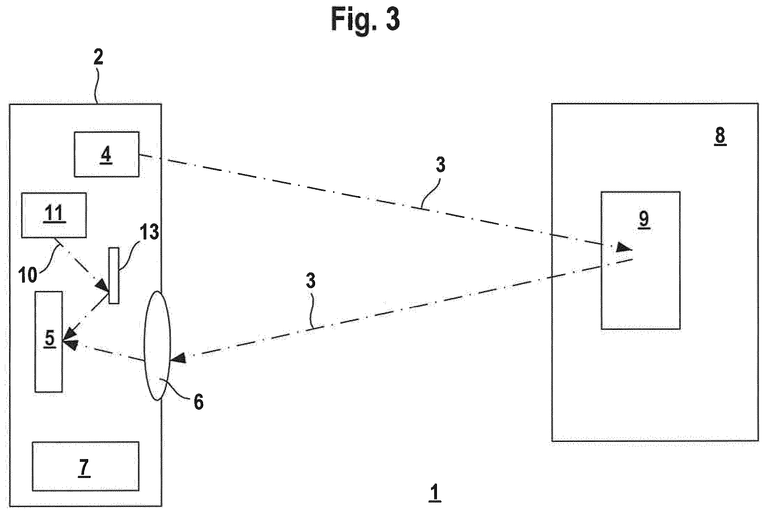

Figur 3 zeigt ein weiteres Ausführungsbeispiel des erfindungsgemäßen optischen Sensors 1. Diese Ausführungsform unterscheidet sich von der Ausführungsform gemäß Figur 2 dadurch, dass neben einer Lichtquelle 4, die Lichtstrahlen 3 in den Erfassungsbereich 8 abstrahlt, eine Testlichtquelle 11 vorgesehen ist, die Testlichtstrahlen 10 über ein Hilfsobjekt 13 innerhalb des Gehäuses 2 des optischen Sensors 1 in den Bildsensor 5 einstrahlt, das heißt die Testlichtstrahlen 10 werden nicht in den Erfassungsbereich 8 geführt.

Die Testlichtquelle 11 kann selbst zur Generierung von räumlich variierenden Testmustern räumlich strukturierte Testlichtstrahlen 10 emittieren. Alternativ kann das Hilfsobjekt 13 eine räumliche Strukturierung aufweisen, so dass dadurch den Testlichtstrahlen 10 bei Reflexion am Hilfsobjekt 13 eine räumliche Strukturierung aufgeprägt wird. Die Vorgabe zeitlicher Variationen von Testmustern erfolgt wieder über eine geeignete Ansteuerung der Testlichtquelle 11 durch die Auswerteeinheit 7.

### Bezugszeichenliste

- (1): Optischer Sensor
- (2): Gehäuse
- (3): Lichtstrahlen
- (4): Lichtquelle
- (5): Bildsensor
- (6): Empfangsoptik
- (7): Auswerteeinheit
- (8): Erfassungsbereich
- (9): Muster
- (10): Testlichtstrahlen
- (11): Testlichtquelle
- (12): Optikelement
- (13): Hilfsobjekt

## Patentansprüche

1. Optischer Sensor (1) zur Erfassung von Objekten in einem Erfassungsbereich (8), mit einer Lichtstrahlen (3) emittierenden Lichtquelle (4), mit einem Empfänger in Form eines eine Anordnung von Empfangselementen aufweisenden Bildsensors (5), und mit einer Auswerteeinheit (7) zur Auswertung von Empfangsbildern des Bildsensors (5), wobei der optische Sensor (1) eine Testlichtstrahlen (10) emittierende Testlichtquelle (11) aufweist, wobei die Testlichtstrahlen (10) auf den Bildsensor (5) geführt sind, wodurch eine Variation der Empfangsbilder erhalten wird, und wobei die Auswerteeinheit (7) ausgebildet ist, Nutzinformationen der Empfangsbilder von Testinformationen, welche von den durch die Testlichtstrahlen (10) bewirkten Variationen der Empfangsbilder gebildet sind, zu separieren und getrennt auszuwerten, **dadurch gekennzeichnet, dass** die Testlichtquelle (11) ausgebildet ist, räumlich und/oder zeitlich variierende, Testmuster bildende Testlichtstrahlen (10) zu emittieren.

2. Optischer Sensor nach Anspruch 1, **dadurch gekennzeichnet, dass** in der Auswerteeinheit (7) durch die Auswertung der Testinformationen eine Fehlerkontrolle von Komponenten des optischen Sensors (1) erfolgt, wobei eine der Komponenten der Empfänger ist.

3. Optischer Sensor nach einem der Ansprüche 1 oder 2, **dadurch gekennzeichnet, dass** mit diesem Positions- und Geschwindigkeitsmessungen durchführbar sind.

4. Optischer Sensor nach einem der Ansprüche 1 bis 3, **dadurch gekennzeichnet, dass** dieser ein Distanzsensor ist.

5. Optischer Sensor nach einem der Ansprüche 1 bis 4, **dadurch gekennzeichnet, dass** mit diesem Muster (9) erfassbar sind.

6. Optischer Sensor nach Anspruch 5, **dadurch gekennzeichnet, dass** die Muster (9) von Codes gebildet sind.

7. Optischer Sensor nach Anspruch 5, **dadurch gekennzeichnet, dass** die Muster (9) in Form von Reflektoreinheiten gebildet sind, welche die Eigenschaften der von der Lichtquelle (4) emittierten Lichtstrahlen (3) ändern.

8. Optischer Sensor nach einem der Ansprüche 1 bis 4, **dadurch gekennzeichnet, dass** der Empfänger eine zeilenförmige oder matrixförmige Anordnung von Empfangselementen aufweist.

9. Optischer Sensor nach einem der Ansprüche 1 bis 8, **dadurch gekennzeichnet, dass** die Testlichtstrahlen (10) der Testlichtquelle (11) in den Erfassungsbereich (8) abgestrahlt werden.

10. Optischer Sensor nach Anspruch 9, **dadurch gekennzeichnet, dass** die Lichtquelle (4) die Testlichtquelle (11) ausbildet.

11. Optischer Sensor nach einem der Ansprüche 1 bis 10, **dadurch gekennzeichnet, dass** dieser ein Hilfsobjekt (13) aufweist, über welches die Testlichtstrahlen (10) zum Empfänger geführt sind.

12. Optischer Sensor nach Anspruch 11, **dadurch gekennzeichnet, dass** das Hilfsobjekt (13) eine Strukturierung aufweist, wobei bei einer Reflexion der Testlichtstrahlen (10) am Hilfsobjekt (13) diesen durch die Strukturierung ein Testmuster aufgeprägt wird.

13. Optischer Sensor nach einem der Ansprüche 1 bis 12, **dadurch gekennzeichnet, dass** sich die Testmuster von der Umgebung des Erfassungsbereichs (8) und von zu detektierenden Objekten unterscheiden.

14. Optischer Sensor nach einem der Ansprüche 1 bis 13, **dadurch gekennzeichnet, dass** dieser ein Sicherheitssensor ist.

## Claims

1. An optical sensor (1) for detecting objects in a detection area (8), having a light source (4) emitting light beams (3), having a receiver in the form of an image sensor (5) having an arrangement of receiving elements, and having an evaluation unit (7) for evaluating received images of the image sensor (5), the optical sensor (1) having a test light source (11) emitting test light beams (10), the test light beams (10) being guided onto the image sensor (5), whereby a variation of the received images is obtained, and wherein the evaluation unit (7) is designed to separate useful information of the received images from test information formed by the variations of the received images caused by the test light beams (10) and to evaluate it separately, **characterised in that** the test light source (11) is designed to emit spatially and/or temporally varying test light beams (10) forming test patterns.

2. The optical sensor according to claim 1, **characterised in that** an error control of components of the optical sensor (1) takes place in the evaluation unit (7) by evaluating the test information, one of the components being the receiver.

3. The optical sensor according to one of claims 1 or 2, **characterised in that** position and speed measurements can be carried out with it.

4. The optical sensor according to one of claims 1 to 3, **characterised in that** it is a distance sensor.

5. The optical sensor according to one of claims 1 to 4, **characterised in that** patterns (9) can be detected with this pattern.

6. The optical sensor according to claim 5, **characterised in that** the patterns (9) are formed by codes.

7. The optical sensor according to claim 5, **characterised in that** the patterns (9) are formed in the form of reflector units which change the properties of the light beams (3) emitted by the light source (4).

8. The optical sensor according to one of claims 1 to 4, **characterised in that** the receiver has a cellular or matrix arrangement of receiving elements.

9. The optical sensor according to one of claims 1 to 8, **characterised in that** the test light beams (10) of the test light source (11) are radiated into the detection area (8).

10. The optical sensor according to claim 9, **characterised in that** the light source (4) forms the test light source (11).

11. The optical sensor according to one of claims 1 to 10, **characterised in that** it has an auxiliary object (13) via which the test light beams (10) are guided to the receiver.

12. The optical sensor according to Claim 11, **characterised in that** the auxiliary object (13) has a structuring, a test pattern being impressed on the auxiliary object (13) by the structuring when the test light beams (10) are reflected at the auxiliary object (13).

13. The optical sensor according to one of claims 1 to 12, **characterised in that** the test patterns differ from the environment of the detection area (8) and from objects to be detected.

14. The optical sensor according to one of claims 1 to 13, **characterised in that** it is a safety sensor.

## Revendications

1. Capteur optique (1) pour la détection d'objets dans une zone de détection (8), avec une source de lumière (4) émettant des rayons lumineux (3), avec un récepteur sous forme de capteur d'images (5) avec un agencement d'éléments de réception et avec une unité d'évaluation (7) pour l'évaluation des images reçues du capteur d'images (5), le capteur optique (1) présentant une source de lumière de test (11) émettant des rayons lumineux de test (10), les rayons lumineux de test (10) étant guidés sur le capteur d'images (5), par lequel une variation des images reçues est obtenue, et dans lequel l'unité d'évaluation (7) est conçue pour séparer les informations utiles des images reçues des informations de test formées par les variations des images reçues provoquées par les faisceaux lumineux de test (10) et pour les évaluer séparément, **caractérisé en ce que** la source de lumière de test (11) est conçue pour émettre des faisceaux lumineux de test (10) variant dans l'espace et/ou dans le temps formant des motifs de test.

2. Capteur optique selon la revendication 1, **caractérisé en ce qu'**un contrôle d'erreurs des composants du capteur optique (1) est effectué dans l'unité d'évaluation (7) en évaluant les informations de test, l'un des composants étant le récepteur.

3. Capteur optique selon l'une des revendications 1 ou 2, **caractérisé en ce que** des mesures de position et de vitesse peuvent être effectuées avec lui.

4. Capteur optique selon l'une quelconque des revendications 1 à 3, **caractérisé en ce qu'**il s'agit d'un capteur de distance.

5. Capteur optique selon l'une des revendications 1 à 4, **caractérisé en ce que** des motifs (9) sont détectables avec ce motif.

6. Capteur optique selon la revendication 5, **caractérisé en ce que** les motifs (9) sont formés par des codes.

7. Capteur optique selon la revendication 5, **caractérisé en ce que** les motifs (9) sont formés sous la forme d'unités de réflecteur qui modifient les propriétés des faisceaux lumineux (3) émis par la source de lumière (4).

8. Capteur optique selon l'une des revendications 1 à 4, **caractérisé en ce que** le récepteur présente une disposition cellulaire ou matricielle des éléments de réception.

9. Capteur optique selon l'une des revendications 1 à 8, **caractérisé en ce que** les faisceaux lumineux de test (10) de la source lumineuse de test (11) sont - rayonnés dans la zone de détection (8).

10. Capteur optique selon la revendication 9, **caractérisé en ce que** la source lumineuse (4) forme la source lumineuse de test (11).

11. Capteur optique selon l'une des revendications 1 à 10, **caractérisé en ce qu'**il comporte un objet auxiliaire (13) par lequel les faisceaux lumineux de test (10) sont guidés vers le récepteur.

12. Capteur optique selon la revendication 11, **caractérisé en ce que** l'objet auxiliaire (13) présente une structuration, une mire de test étant imprimée sur l'objet auxiliaire (13) par la structuration lorsque les faisceaux lumineux de test (10) sont réfléchis sur l'objet auxiliaire (13).

13. Capteur optique selon l'une des revendications 1 à 12, **caractérisé en ce que** les mires diffèrent de l'environnement de la zone de détection (8) et des objets à détecter.

14. Capteur optique selon l'une des revendications 1 à 13, **caractérisé en ce qu'**il s'agit d'un capteur de sécurité.
